# EUROPEAN PATENT APPLICATION

(11) **EP 3 872 602 A1**
(43) Date of publication of application: **01.09.2021**
(21) Application number: 19877515.7
(22) Date of filing: 09.10.2019
(51) Int. Cl.: G06F 1/26

(54) **SLEEP OF POWER SUPPLY, SLEEP DETERMINATION METHOD AND DEVICE, SLEEP DEVICE**

(30) Priority: 26.10.2018 CN 201811260026
(71) Applicant: ZTE Corporation, Shenzhen, Guangdong 518057 (CN)
(72) Inventor: XIE, Jincheng, Shenzhen, Guangdong 518057 (CN); MENG, Yanni, Shenzhen, Guangdong 518057 (CN); SUN, Hao, Shenzhen, Guangdong 518057 (CN); LU, Zhifeng, Shenzhen, Guangdong 518057 (CN); HONG, Xiaoqin, Shenzhen, Guangdong 518057 (CN); LIU, Shanshan, Shenzhen, Guangdong 518057 (CN)
(74) Representative: Deambrogi, Edgardo
(86) International application number: PCT/CN2019/110089
(87) International publication number: WO 2020/083025

(57) **Abstract**

Provided are a hibernation method and device for a power supply, a method and device for determining hibernation of a power supply, and a hibernation apparatus. The hibernation method for the power supply includes: a hibernation device for a power supply selects, according to power supply information of each power supply in a parallel power supply system, one or more power supplies which are to enter a hibernation mode, wherein the power supply information at least includes: an electric energy input type of the power supply and conversion efficiency of the power supply. The method for determining hibernation of the power supply includes: a parallel power supply system determines, according to load information of a load system to which power is supplied, a hibernation mode which one or more power supplies in a parallel power supply system enter, wherein the one or more power supplies are determined according to the power supply information of each power supply in the parallel power supply system, the power supply information at least includes: the electric energy input type of the power supply and the conversion efficiency of the power supply. An overall energy-saving control strategy with low cost and high return on investment is achieved.

## Description

### Cross-Reference to Related Application

The present disclosure claims the priority of Chinese Patent Application No. 201811260026.4, filed to the China National Intellectual Property Administration on October 26, 2018 and entitled "Hibernation Method and Device for Power Supply, Method and Device for Determining Hibernation of Power Supply, and Hibernation Apparatus", the entire contents of which are incorporated herein by reference.

### Technical Field

The embodiments of the present disclosure relate to the field of communication, specifically, relate to a hibernation method and device for a power supply, a method and device for determining hibernation of a power supply, and a hibernation apparatus.

### Background

With the continuous increase of communication service volume, the requirement of a system for the power supplying capacity of a power supply is gradually increasing. To meet the requirement, the power supply capacity is increasingly larger, but it is increasingly difficult for independent power supplies to supply power on their own. As a result, a parallel connection mode of power supplies gradually tends to be used in power supplying, and has been increasingly widespread in application due to its configuration flexibility and operation reliability.

As a power supply applied in a communication device, while the reliability of the power supply is considered, power supply management has been progressing towards power saving of the power supply. The improvement of the power supply efficiency is the most intuitive energy-saving means, which has high technical requirements, and accordingly, the industry seeks to improve the efficiency of the power supply through the overall management of the power supply system. In particular, for a parallel power supply system, a cold backup management method is proposed in the related art. In this control method, according to a system load condition, a part of power supplies are informed to enter a cold backup state, and output voltage of these power supplies is lowered to achieve a result of not providing power output, thereby increasing the load rate of other normal operating power supplies and further improving the overall efficiency of the power supply system. In addition, as an important factor and a dynamic factor of system management, the load is not applied to the above management strategy. If reliability is considered in the control method and the number of the operating power supplies is reserved according to the rated load, the energy-saving effect will be influenced. If only a small number of power supplies operate for maximizing the energy-saving effect, a risk of influencing reliable power supplying will be caused. In addition, the cold backup concepts involved in the two control methods only lower the output voltage to stop supplying power to the system, but the whole circuit is still in an operating state and consumes energy, that is no-load loss basically. Based on the above analysis, it can be concluded that there is a problem that the improvement on the overall energy-saving effect of the power supply system only through increasing the power supply load rate is not obvious in the related art.

### Summary

The embodiments of the present disclosure provide a hibernation method and device for a power supply, a method and device for determining hibernation of a power supply, and a hibernation apparatus, which may at least solve the problem that the improvement on the overall energy-saving effect of the power supply system only through increasing the power supply load rate is not obvious in the related art.

According to an embodiment of the present disclosure, provided is a hibernation method for a power supply. The method includes an operation that a hibernation device for a power supply selects, according to power supply information of each power supply in a parallel power supply system, one or more power supplies which are to enter a hibernation mode, wherein the power supply information at least includes: an electric energy input type of the power supply and conversion efficiency of the power supply.

In at least one exemplary implementation of the embodiment, the hibernation device for the power supply selects the one or more power supplies which are to enter the hibernation mode according to the power supply information of each power supply in the parallel power supply system in the following manner. In a case where power supplies in the parallel power supply system are of the same electric energy input type and have the same conversion efficiency, the hibernation device for the power supply selects, according to operating information of each power supply, the one or more power supplies which are to enter the hibernation mode.

In at least one exemplary implementation of the embodiment, the operating information includes at least one of: operation time of each power supply and an operation temperature of each power supply.

In at least one exemplary implementation of the embodiment, the hibernation device for the power supply selects the one or more power supplies which are to enter the hibernation mode according to the power supply information of each power supply in the parallel power supply system in the following manner. In a case where power supplies in the parallel power supply system are of different electric energy input types and have the same conversion efficiency, the hibernation device for the power supply selects, according to the electric energy input type of each power supply, the one or more power supplies which are to enter the hibernation mode.

In at least one exemplary implementation of the embodiment, the operation that the hibernation device for the power supply selects the one or more power supplies which are to enter the hibernation mode according to the power supply information of each power supply in the parallel power supply system may further include the following operations. The hibernation device for the power supply obtains the electric energy input type of each power supply, and sorts electric energy input efficiency of the power supplies according to the electric energy input type of each power supply. The hibernation device for the power supply selects, according to a sorting result of the electric energy input efficiency of the power supplies and an electric energy input state of each power supply, one or more power supplies from low to high as the one or more power supplies which are to enter the hibernation mode.

In at least one exemplary implementation of the embodiment, the hibernation device for the power supply selects the one or more power supplies which are to enter the hibernation mode according to the power supply information of each power supply in the parallel power supply system in the following manner. In a case where power supplies in the parallel power supply system are of the same electric energy input type and have different conversion efficiency, the hibernation device for the power supply sorts the conversion efficiency of the power supplies, and selects one or more power supplies from low to high as the one or more power supplies which are to enter the hibernation mode.

In at least one exemplary implementation of the embodiment, the operation that the hibernation device for the power supply sorts the conversion efficiency of the power supplies may further include the following operation. The hibernation device for the power supply sorts the conversion efficiency of the power supplies according to an efficiency level of each power supply.

In at least one exemplary implementation of the embodiment, the hibernation device for the power supply selects the one or more power supplies which are to enter the hibernation mode according to the power supply information of each power supply in the parallel power supply system in the following manner. In a case where power supplies in the parallel power supply system are of different electric energy input types and have different conversion efficiency, the hibernation device for the power supply comprehensively selects, according to the electric energy input type and the conversion efficiency of each power supply, the one or more power supplies which are to enter the hibernation mode.

According to an embodiment of the present disclosure, provided is a method for determining hibernation of a power supply. The method includes the following operation. A hibernation device for a power supply determines, according to load information of a load system to which power is supplied, a hibernation mode which one or more power supplies in a parallel power supply system enter. Herein, the one or more power supplies are determined according to power supply information of each power supply in the parallel power supply system, and the power supply information at least includes: an electric energy input type of the power supply and conversion efficiency of the power supply.

In at least one exemplary implementation of the embodiment, the hibernation device for the power supply determines the hibernation mode which the one or more power supplies enter in the following manner. The one or more power supplies determine whether load traffic of the load system satisfies a hibernation threshold. In a case of determining that the load traffic of the load system satisfies the hibernation threshold, the one or more power supplies enter a hibernation mode corresponding to the hibernation threshold.

In at least one exemplary implementation of the embodiment, the hibernation device for the power supply determines the hibernation mode which the one or more power supplies enter in the following manner. In a case where the one or more power supplies determine that the load traffic of the load system satisfies a first hibernation threshold, the one or more power supplies enter a first hibernation mode and reduce output voltage.

In at least one exemplary implementation of the embodiment, the hibernation device for the power supply determines the hibernation mode which the one or more power supplies enter in the following manner. In a case where the one or more power supplies determine that the load traffic of the load system satisfies a second hibernation threshold, the one or more power supplies enter a second hibernation mode and shut off output voltage, wherein the second hibernation threshold is lower than the first hibernation threshold.

In at least one exemplary implementation of the embodiment, the hibernation device for the power supply determines the hibernation mode which the one or more power supplies enter in the following manner. In a case where the one or more power supplies entering the second hibernation mode determine that the load traffic of the load system increases and satisfies a third hibernation threshold, the one or more power supplies enter the first hibernation mode and reduce the output voltage, wherein the third hibernation threshold is a sum of the second hibernation threshold and a load traffic increment.

In at least one exemplary implementation of the embodiment, after the one or more power supplies enter the hibernation mode corresponding to the hibernation threshold, the operation that the hibernation device for the power supply determines the hibernation mode which the one or more power supplies enter may further include the following operation. In a case where the one or more power supplies entering the hibernation mode determine that the load traffic of the load system increases and satisfies a fourth hibernation threshold, the one or more power supplies quit the hibernation mode and recover output of operating voltage, wherein the fourth hibernation threshold is a sum of the first hibernation threshold and a load traffic increment.

In at least one exemplary implementation of the embodiment, after the hibernation device for the power supply determines the hibernation mode which the one or more power supplies enter, the method may further include the following operations. One or more power supplies entering the hibernation mode detect whether a hibernation common signal between power supplies is set to indicate failure. In a case of detecting that the hibernation common signal is set to indicate failure, the one or more power supplies entering the hibernation mode quit the hibernation mode and recover output of operating voltage.

In at least one exemplary implementation of the embodiment, after the one or more power supplies entering the hibernation mode quit the hibernation mode and recover the output of the operating voltage, the method may further include the following operations. The one or more power supplies with the output of the operating voltage recovered detect whether the hibernation common signal between the power supplies is set to indicate normal operation. In a case of detecting that the hibernation common signal is set to indicate normal operation, the one or more power supplies with the output of the operating voltage recovered reenter the hibernation mode.

According to another embodiment of the present disclosure, provided is a hibernation device for a power supply, the device including one or more processors and one or more memories storing one or more program units. The one or more program units are executed by the processor and include: a selection module, configured to select, according to power supply information of each power supply in a parallel power supply system, one or more power supplies which are to enter a hibernation mode, wherein the power supply information at least includes: an electric energy input type of the power supply and conversion efficiency of the power supply.

In at least one exemplary implementation of the embodiment, the selection module may further include: a first selection unit, configured to select, in a case where power supplies in the parallel power supply system are of the same electric energy input type and have the same conversion efficiency, the one or more power supplies which are to enter the hibernation mode according to operating information of each power supply.

In at least one exemplary implementation of the embodiment, the selection module may further include: a second selection unit, configured to select, in a case where power supplies in the parallel power supply system are of different electric energy input types and have the same conversion efficiency, the one or more power supplies which are to enter the hibernation mode according to the electric energy input type of each power supply.

In at least one exemplary implementation of the embodiment, the second selection unit is further configured to obtain the electric energy input type of each power supply, and sort electric energy input efficiency of the power supplies according to the electric energy input type of each power supply; and select, according to a sorting result of the electric energy input efficiency of the power supplies and an electric energy input state of each power supply, one or more power supplies from low to high as the one or more power supplies which are to enter the hibernation mode.

In at least one exemplary implementation of the embodiment, the selection module may further include: a third selection unit, configured to, in a case where power supplies in the parallel power supply system are of the same electric energy input type and have different conversion efficiency, sort the conversion efficiency of the power supplies, and select one or more power supplies from low to high as the one or more power supplies which are to enter the hibernation mode.

In at least one exemplary implementation of the embodiment, the third selection unit is further configured to sort the conversion efficiency of the power supplies according to an efficiency level of each power supply.

In at least one exemplary implementation of the embodiment, the selection module may further include: a fourth selection unit, configured to comprehensively select, in a case where power supplies in the parallel power supply system are of different electric energy input types and have different conversion efficiency, the one or more power supplies which are to enter the hibernation mode according to the electric energy input type and the conversion efficiency of each power supply.

According to another embodiment of the present disclosure, provided is a device for determining hibernation of a power supply. The device is located in a parallel power supply system and includes one or more processors and one or more memories storing one or more program units. The one or more program units are executed by the processor and include: a determination module, configured to determine, according to load information of a load system to which power is supplied, a hibernation mode which one or more power supplies in a parallel power supply system enter, wherein the one or more power supplies are determined according to the power supply information of each power supply in the parallel power supply system, and the power supply information at least includes: an electric energy input type of the power supply and conversion efficiency of the power supply.

In at least one exemplary implementation of the embodiment, the determination module is further configured to determine whether load traffic of the load system satisfies a hibernation threshold; and determine, in a case of determining that the load traffic of the load system satisfies the hibernation threshold, that the one or more power supplies enter a hibernation mode corresponding to the hibernation threshold.

In at least one exemplary implementation of the embodiment, the determination module is further configured to determine, in a case of determining that the load traffic of the load system satisfies a first hibernation threshold, that the one or more power supplies enter a first hibernation mode and reduce output voltage.

In at least one exemplary implementation of the embodiment, the determination module is further configured to determine, in a case of determining that the load traffic of the load system satisfies a second hibernation threshold, that the one or more power supplies enter a second hibernation mode and shut off output voltage, wherein the second hibernation threshold is less than the first hibernation threshold.

In at least one exemplary implementation of the embodiment, the determination module is further configured to determine, in a case of determining that the load traffic of the load system increases and satisfies a third hibernation threshold, that the one or more power supplies entering the second hibernation mode enter the first hibernation mode and reduce output voltage, wherein the third hibernation threshold is a sum of the second hibernation threshold and a load traffic increment.

In at least one exemplary implementation of the embodiment, the determination module is further configured to determine, in a case of determining that the load traffic of the load system increases and satisfies a fourth hibernation threshold, that the one or more power supplies entering the hibernation mode quit the hibernation mode and recover output of operating voltage, wherein the fourth hibernation threshold is a sum of the first hibernation threshold and a load traffic increment.

In at least one exemplary implementation of the embodiment, the determination module may further include: a first detection module, configured to detect whether a hibernation common signal between power supplies is set to indicate failure; and a first determination unit, configured to determine, in a case where the first detection module detects that the hibernation common signal is set to indicate failure, that the one or more power supplies entering the hibernation mode quit the hibernation mode and recover output of operating voltage.

In at least one exemplary implementation of the embodiment, the determination module may further include: a second detection module, configured to detect whether the hibernation common signal between the power supplies is set to indicate normal operation; and a second determination unit, configured to determine, in a case where the second detection module detects that the hibernation common signal is set to indicate normal operation, that the one or more power supplies with the output of the operating voltage recovered reenter the hibernation mode.

According to another embodiment of the present disclosure, provided is a hibernation apparatus for a power supply, the apparatus including: a parallel power supply system, an interface unit, a monitoring unit, and a load system. The monitoring unit is configured to obtain power supply information of each power supply in the parallel power supply system by means of the interface unit, and select, according to the power supply information of each power supply, one or more power supplies which are to enter a hibernation mode. The parallel power supply system is configured to obtain the one or more power supplies which are to enter the hibernation mode by means of the interface unit, obtain, by means of the interface unit, load information of the load system to which the parallel power supply system supplies power, and determine the hibernation mode which one or more power supplies in a parallel power supply system enter.

According to yet another embodiment of the present disclosure, further provided is storage medium, the storage medium storing a computer program, wherein the computer program is configured to execute the operation of any one of the method embodiments described above.

According to yet another embodiment of the present disclosure, further provided is an electronic device, including a memory and a processor, wherein the memory stores a computer program, and the processor is configured to run the computer program to execute the operation of any one of the method embodiments described above.

By means of the embodiments of the present disclosure, an optimal energy-saving control strategy can be carried out according to the system power input type and the conversion efficiency. Meanwhile, in a dynamic hibernation mode, two-grade hibernation can be achieved to maximize the energy-saving effect, and self-management of the hibernation function can be achieved through monitoring the load in real time by the power supplies without system intervention. The use of a hibernation common signal can ensure reliable and stable power supplying of the power supplies. The problem in the related art that the improvement on the overall energy-saving effect of the power supply system only through increasing the power supply load rate is not obvious is solved. An overall energy-saving control strategy with low cost and high return on investment is achieved.

### Brief Description of the Drawings

The accompanying drawings described herein are used to provide a deeper understanding of the present disclosure, and constitute a part of the present application. The exemplary embodiments of the present disclosure and the description thereof are used to explain the present disclosure. The drawings and the exemplary embodiment do not constitute limitations to the present disclosure. In the drawings:
Fig. 1 is a hardware structural block diagram of a mobile terminal to which a hibernation method for a power supply may be applied according to an embodiment of the present disclosure;
Fig. 2 is a flow chart of a hibernation method for a power supply according to an embodiment of the present disclosure;
Fig. 3 is a flow chart of a method for determining hibernation of a power supply according to an embodiment of the present disclosure;
Fig. 4 is a flow chart of graded hibernation control according to an embodiment of the present disclosure;
Fig. 5 is a structural block diagram of a hibernation device for a power supply according to an embodiment of the present disclosure;
Fig. 6 is a structural block diagram of a device for determining hibernation of a power supply according to an embodiment of the present disclosure;
Fig. 7 is a structural block diagram of a hibernation apparatus for a power supply according to an embodiment of the present disclosure.

### Detailed Description of the Embodiments

The present disclosure is described below in detail with reference to the drawings and in conjunction with the embodiments. It is to be noted that embodiments in the present application and characteristics in the embodiments may be combined to derive other embodiments not explicitly described.

It is to be noted that the terms "first", "second" and the like in the specification, the claims and the drawings of the present disclosure are used to distinguish similar objects, and are not used to describe a specific sequence or a precedence order.

### Embodiment 1

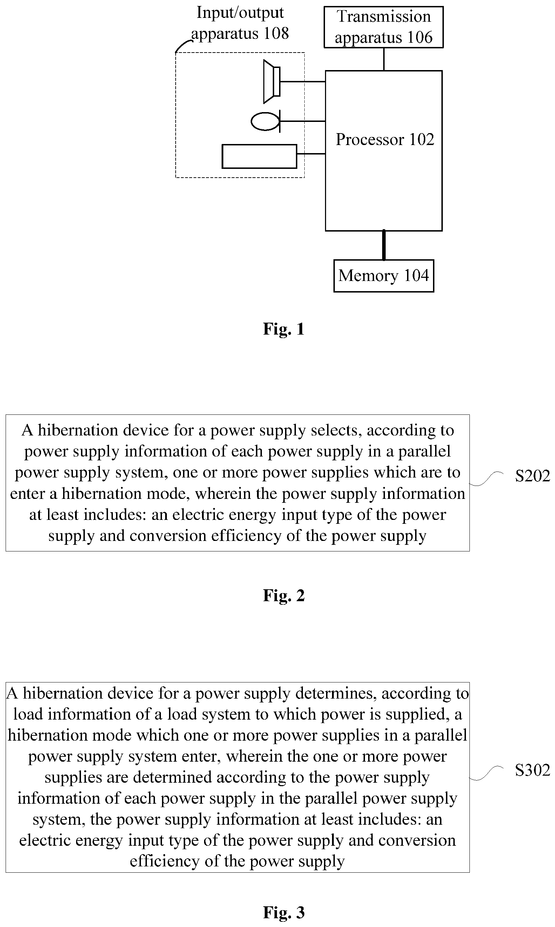

The method embodiment provided by the first embodiment of the present disclosure may be executed in a mobile terminal, a computer terminal or a similar computing apparatus. For example, the method may be executed on a mobile terminal. Fig. 1 is a hardware structural block diagram of a mobile terminal to which a hibernation method for a power supply may be applied according to an embodiment of the present disclosure. As shown in Fig. 1, the mobile terminal 10 may include one or more (only one is shown in Fig. 1) processors 102 (the processor 102 may include, but not limited to, a processing device, for example, a microprocessor (MCU) or a programmable logic device (FPGA)) and a memory 104 for storing data. In at least one exemplary implementation of the embodiment, the mobile terminal may further include a transmission apparatus 106 with a communication function and an input/output apparatus 108. The person having ordinary skill in the art will appreciate that the structure shown in Fig. 1 is merely schematic and does not pose a limitation on the structure of the mobile terminal described above. For example, the mobile terminal 10 may further include more or fewer assembly than that shown in Fig. 1, or have a different configuration from that shown in Fig. 1.

The memory 104 may be configured to store a computer program such as a software program and module of application software, for example, a computer program corresponding to the hibernation method for the power supply in the embodiment of the present disclosure. The processor 102 executes various functional applications and data processing (i.e., implements the above method) by running the computer program stored in the memory 104. The memory 104 may include a high-speed random access memory, and may alternatively or additionally include a non-volatile memory, for example, one or more magnetic storage apparatuses, flash memories, or other non-volatile solid-state memories. In some examples, the memory 104 may alternatively or additionally include a memory remotely disposed with respect to the processor 102, and the remote memory may be connected to the mobile terminal 10 by means of a network. Examples of networks described above include, but not limited to, the Internet, enterprise intranets, local area networks, mobile communication networks, and combinations thereof.

A transmission device 106 is configured to receive or transmit data through a network. Specific examples of the network described above may include a wireless network provided by a communications provider of the mobile terminal 10. In one example, the transmission device 106 includes a network interface controller (NIC), which may be connected with other network apparatuses by means of a base station so as to communicate with the Internet. In one example, the transmission device 106 may be a radio frequency (RF) module, which is configured to communicate wirelessly with the Internet.

This embodiment provides a hibernation method for the power supply, which may be executed on the above mobile terminal. Fig. 2 is a flow chart of a hibernation method for a power supply according to an embodiment of the present disclosure. As shown in Fig. 2, the flow includes operation S202 which is described in detail below.

In operation S202, a hibernation device for a power supply selects, according to power supply information of each power supply in a parallel power supply system, one or more power supplies which are to enter a hibernation mode. In the embodiment, the power supply information at least includes: an electric energy input type of the power supply and conversion efficiency of the power supply.

In at least one exemplary implementation of the embodiment, the power information may be collected by means of the following modes.

In at least one exemplary implementation of the embodiment, the electric energy input type of the power supply may be obtained by means of the following mode: after each power supply completes the respective input type judgment, the hibernation device for the power supply issues, through a communication link, a command to each power supply to query the electric energy input type of each power supply to complete the collection of the electric energy input type of each power supply.

In at least one exemplary implementation of the embodiment, the conversion efficiency of the power supply may be obtained by means of the following mode. A load efficiency curve group taking a temperature and an input voltage as a parameter separately may be preset for each power supply at a factory. During on-site operation, the power supply may perform efficiency detection according to actual operation conditions and the result of the efficiency detection may be compared with a preset efficiency curve group for calibration, and meanwhile, standard load efficiency curve group revision is completed by using this calibration data as a reference so as to achieve self-adaption of the load curve. Each power supply obtains conversion efficiency of the power supply, due to the facts that the input type and the input voltage level of the power supply in the parallel power supply system may be different and the input voltage has large influence on the power supply efficiency, during the obtaining of the conversion efficiency of the power supply, a load efficiency curve may be selected according to an input voltage value, and then the conversion efficiency of the power supply is determined according to the system load. A command is issued, through the communication link, to each power supply to query the conversion efficiency of each power supply to complete the collection of the conversion efficiency of each power supply.

In at least one exemplary implementation of the embodiment, the hibernation device for the power supply presets an input type efficiency prioritization table according to system application scenarios. The hibernation device for the power supplies determines the number of power supplies which are to enter the hibernation mode and selects the power supplies which are to enter the hibernation mode according to the input type and conversion efficiency of each power supply of the system, in combination with the system load condition.

In at least one exemplary implementation of the embodiment, since the electric energy input type of each power supply and the conversion efficiency of each power supply may be identical or different, a hibernation mode is provided for the following four conditions.
(1) In a case where power supplies in the parallel power supply system are of the same electric energy input type and have the same conversion efficiency, the hibernation device for the power supplies selects, according to operating information of each power supply, the one or more power supplies which are to enter the hibernation mode.
   In at least one exemplary implementation of the embodiment, the operating information includes at least one of: operation time of each power supply and an operation temperature of each power supply.
   For example, under the condition that there are two power supplies having operated for longer time compared with other power supplies in the parallel power supply system, for mitigating aging of devices in the power supplies, the two power supplies may be selected as candidate hibernating power supplies. Under the condition that the operation of other power supplies in the parallel power supply system can satisfy the requirement, the two candidate hibernating power supplies hibernate. Under the condition that the operation of the current operating power supplies cannot satisfy the operating requirement, the power supply with longer operation time in the two power supplies hibernates, and the power supply with the shorter operation time continues operating.
   For another example, under the condition that there are four power supplies with operation temperature greater than those of other power supplies in the parallel power supply system, for cooling the entire parallel power supply system, the four power supplies may be selected as candidate hibernating power supplies. Under the condition that the operation of other power supplies in the parallel power supply system can satisfy the requirement, the four candidate hibernating power supplies hibernate. Under the condition that the operation of the current operating power supplies cannot satisfy the operating requirement and an additional power supply is required to continue operating, one candidate hibernating power supply with a lowest operation temperature among the four candidate hibernating power supplies is indicated to continue operating, and the other three candidate hibernating power supplies with higher operation temperature enter a hibernation state.
   It is to be noted that, according to actual needs, the one or more power supplies which are to enter the hibernation state may be determined in combination with the operation time of the power supply and the operation temperature of the power supply. In addition, the reference to other operating information in the determination of the one or more power supplies which are to enter the hibernation state is also within the scope of protection of this embodiment.
(2) In a case where power supplies in the parallel power supply system are of different electric energy input types and have the same conversion efficiency, the hibernation device for the power supplies selects, according to the electric energy input type of each power supply, the one or more power supplies which are to enter the hibernation mode.

In at least one exemplary implementation of the embodiment, the hibernation device for the power supply obtains the electric energy input type of each power supply, and sorts electric energy input efficiency of the power supplies according to the electric energy input type of each power supply. The hibernation device for the power supply selects, according to a sorting result of the electric energy input efficiency of the power supplies and an electric energy input state of each power supply, one or more power supplies with electric energy input efficiency lower than a preset efficiency threshold as the one or more power supplies which are to enter the hibernation mode.

In at least one exemplary implementation of the embodiment, the hibernation device for the power supply may sort the electric energy input efficiency of the power supplies in two methods as follows.
1) The sorting may be performed on the basis of power supply energy loss. The difference in the input voltage types of the power supplies has great influence on the power supply energy loss of the power supplies. For example, when an alternating current power supply supplies power in an alternating current input mode, the power supply needs to be subject to two-stage conversion when outputting direct current. When the alternating current power supply supplies power in a high-voltage direct current input mode, the power supply only needs to be subject to one-stage conversion when outputting the direct current, such that the power supply energy loss of the direct current is smaller.
2) The sorting may be performed on the basis of the evaluation on input efficiency of the power supplies. For example, the alternating current input comes directly from a grid, while the high-voltage direct current input comes from the AC/DC conversion, and accordingly, the electric energy input efficiency of the alternating current is greater than that of the high-voltage direct current.
   In at least one exemplary implementation of the embodiment, the hibernation device for the power supply obtains the electric energy input efficiency of each power supply, then sorts electric energy input efficiency of the power supplies, and selects one or more power supplies from low to high as the one or more power supplies which are to enter the hibernation mode.
   For example, under the condition that ten power supplies with parallel outputs are included in the parallel system and only four power supplies are needed to satisfy the requirements of the load system, electric energy input efficiency of the power supplies is sorted in an ascending order, starting from a power supply corresponding to the lowest electric energy input efficiency, power supplies corresponding to electric energy input efficiency lower than or equal to the fourth electric energy input efficiency are selected to stop operating and serve as power supplies which are to enter a hibernation mode.
   It is to be noted that the preset efficiency threshold may be adjusted in real time according to the requirements of the load system.
   In addition, for increasing reliability, each power supply may automatically determine its input voltage type, and then electric energy input efficiency of the power supplies may be determined and sorted according to the determination result provided by each power supply.
(3) In a case where power supplies in the parallel power supply system are of the same electric energy input type and have different conversion efficiency, the conversion efficiency of the power supplies are sorted; and one or more power supplies are selected from low to high as the one or more power supplies which are to enter the hibernation mode.
   In at least one exemplary implementation of the embodiment, the difference in the efficiency is obvious in a system in which power supplies of different efficiency levels are mixed. In a system with the power supplies of the identical efficiency level, the difference in the efficiency is mainly from individual differences.
   For example, under the condition that eight power supplies with parallel outputs are included in the parallel system and five power supplies need to operate to satisfy the requirements of the load system, the conversion efficiency of the power supplies is sorted in an ascending order, starting from a power supply corresponding to the lowest conversion efficiency, power supplies corresponding to conversion efficiency lower than or equal to the fifth conversion efficiency are selected to stop operating and serve as power supplies which are to enter a hibernation mode.
   In at least one exemplary implementation of the embodiment, the hibernation device for the power supply sorts the conversion efficiency of the power supplies according to an efficiency level of each power supply.
   It is to be noted that under the condition of identical other factors, the conversion efficiency of the power supply with higher input voltage is higher than the conversion efficiency of the power supply with lower input voltage. Thus, the level of the input power supply may be referenced when the conversion efficiency of the power supply is sorted.
(4) In a case where power supplies in the parallel power supply system are of different electric energy input types and have different conversion efficiency, the hibernation device for the power supply comprehensively selects, according to the electric energy input type and the conversion efficiency of each power supply, the one or more power supplies which are to enter the hibernation mode.

In at least one exemplary implementation of the embodiment, similar to the methods described in (2) and (3), in a case where power supplies in the parallel power supply system are of the same electric energy input type and have different conversion efficiency, the hibernation device for the power supply may comprehensively consider a sorting result obtained after sorting electric energy input efficiency of the power supplies according to the electric energy input type of each power supply and a sorting result obtained after sorting the conversion efficiency of the power supplies.

In at least one exemplary implementation of the embodiment, after the power supplies which are to enter the hibernation mode are selected, the power supplies selected to enter the hibernation mode are notified one by one so as to satisfy the energy-saving requirement.

Through the description of the above implementations, those having ordinary skill in the art can understand that the method according to the above embodiment may be implemented by means of software plus a necessary general hardware platform, and of course, may also be implemented through hardware, but in many cases, the former is a better implementation. Based on such understanding, the essence of technical solution of the embodiments of the present disclosure, or in other words, the part of the technical solutions making contributions to the conventional art, may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, or a network device, etc.) to perform the methods described in various embodiments of the present disclosure.

### Embodiment 2

Provided in the embodiment is a method for determining hibernation of a power supply, which may be executed on a mobile terminal similar to that in embodiment 1, and what have been described will not be repeated. Fig. 3 is a flow chart of a method for determining hibernation of a power supply according to an embodiment of the present disclosure. As shown in Fig.3, the flow includes operation S302 which is described in detail below.

In operation S302, a parallel power supply system determines, according to load information of a load system to which power is supplied, a hibernation mode which one or more power supplies in a parallel power supply system enter, wherein the one or more power supplies are determined according to the power supply information of each power supply in the parallel power supply system, and the power supply information at least includes: an electric energy input type of the power supply and conversion efficiency of the power supply.

In at least one exemplary implementation of the embodiment, after receiving an instruction for the power supply to enter the hibernation mode, the power supply in the parallel power supply system monitors the load information of the load system to which the parallel power supply system supplies power, and determines load traffic.

In at least one exemplary implementation of the embodiment, the hibernation device for the power supply may determine the hibernation mode which the one or more power supplies enter in the following manner. The one or more power supplies determine whether load traffic of the load system satisfies a hibernation threshold. In a case of determining that the load traffic of the load system satisfies the hibernation threshold, the one or more power supplies enter a hibernation mode corresponding to the hibernation threshold.

In at least one exemplary implementation of the embodiment, in a case where the one or more power supplies determine that the load traffic of the load system satisfies a first hibernation threshold, the one or more power supplies enter a first hibernation mode and reduce output voltage.

In at least one exemplary implementation of the embodiment, in a case where the one or more power supplies determine that the load traffic of the load system satisfies a second hibernation threshold, the one or more power supplies enter a second hibernation mode and shut off output voltage.

In at least one exemplary implementation of the embodiment, the second hibernation threshold is lower than the first hibernation threshold.

In a case where the one or more power supplies entering the second hibernation mode determine that the load traffic of the load system increases and satisfies a third hibernation threshold, the one or more power supplies enter the first hibernation mode and reduce output voltage, wherein the third hibernation threshold is a sum of the second hibernation threshold and a load traffic increment.

It is to be noted that for preventing oscillation of the second threshold, the third hibernation threshold is different from the second threshold.

In at least one exemplary implementation of the embodiment, in a case where the one or more power supplies entering the hibernation mode determine that the load traffic of the load system increases and satisfies a fourth hibernation threshold, the one or more power supplies quit the hibernation mode and recover output of operating voltage, wherein the fourth hibernation threshold is a sum of the first hibernation threshold and a load traffic increment.

In at least one exemplary implementation of the embodiment, in daily electricity consumption, in order to guarantee normal operation of the load in summer days, the terminal apparatus in which the load system is located needs to be cooled, such that the power supplying requirement of the load system is usually much greater than that in other seasons. Therefore, a sharp increase and decrease in the power supplying requirement of the load system is unavoidable. In addition, in the daily life, the power supplying requirement is large during the morning and afternoon working hours, while the power supplying requirement is not high at noon and evening. Therefore, variations in the power supplying requirement of the load system are also very noticeable within the working hours. Therefore, in actual use, the power supplying requirement of the load system is not stable. If the apparatus hibernates according to a general power supplying requirement change, on one hand, other operating power supplies may be overloaded to cause high failure rate to the power supplies in the parallel power supply system, and on the other hand, electric energy may be wasted. Therefore, for solving the above problems, the power supply in the operating state may directly determine whether the first hibernation threshold is satisfied without determining whether the second hibernation threshold is satisfied. In addition, when power supplying is unstable, the power supply in the second hibernation mode may also skip the determination on whether the third hibernation threshold is satisfied, and directly determine whether the fourth hibernation threshold is satisfied, so as to adapt to the operating requirement of the power supply.

Under the condition that the power supply entering the second hibernation mode determines that a load traffic increment rate is greater than a preset increment rate threshold, it represents that the power supplying requirement of the load system is high, then the power supply may adaptively lower the third hibernation threshold (but not lower than the second hibernation threshold) according to the actual size of the load traffic increment rate, so that the power supply may enter the first hibernation mode in advance. On the other hand, under the condition that the power supply entering the second hibernation mode determines that the load traffic increment rate is lower than a preset increment rate threshold, it represents that the power supplying requirement of the load system is maintained at a slow increasing level and the power supplying requirement may be reduced at any time, the power supply may adaptively increase the third hibernation threshold (but not higher than the first hibernation threshold).

In addition, under the condition that the power supply entering the hibernation mode determines that the load traffic increment rate of the load system is far greater than the preset increment rate threshold, it represents that the load system is in an emergency state requiring full load power supplying of the parallel power supply system, then the power supply may immediately exit the hibernation mode and enter the operating mode.

In at least one exemplary implementation of the embodiment, a hibernation common signal between power supplies is connected. The hibernation common signal may indicate that the power supplies are normal during normal startup, and when a fault occurs, the fault power supply will inform other power supplies via the hibernation common signal. Each power supply needs to monitor the hibernation common signal in real time. In at least one exemplary implementation of the embodiment, one or more power supplies entering the hibernation mode detect whether the hibernation common signal between the power supplies is set to indicate failure. In a case of detecting that the hibernation common signal is set to indicate failure, the one or more power supplies entering the hibernation mode quit the hibernation mode and recover output of operating voltage.

In at least one exemplary implementation of the embodiment, the one or more power supplies with the output of the operating voltage recovered detect whether the hibernation common signal between the power supplies is set to indicate normal operation. In a case of detecting that the hibernation common signal is set to indicate normal operation, the one or more power supplies with the output of the operating voltage recovered reenter the hibernation mode.

In at least one exemplary implementation of the embodiment, under the condition that an operating power supply fails, the operating power supply sets the hibernation common signal common to the power supplies to a low level (generally identified by logic 0), and informs the power supply entering the hibernation mode of such failure through the hibernation common signal. When the power supply entering the hibernation mode detects a high level hibernation common signal, the problem of insufficient power supplying in the current parallel power supply system is illustrated. After the power supply entering the hibernation mode saves hibernation mode related information, the power supply quits the hibernation mode and recovers the output of the operating voltage for supplying power to the load system.

In at least one exemplary implementation of the embodiment, under the condition that the operating power supply restores to normal operation, then the operating power supply may set the hibernation common signal common to the power supplies to a high level (generally identified by logic 1), indicating that the power supply that recovers the output of the operating voltage to supply power to the load system has no necessity for supplying power to the load system any more. Therefore, these power supplies that recover the output of the operating voltage to supply power to the load system enter the corresponding hibernation mode according to the pre-saved hibernation mode related information. Thus, the waste of electrical energy is reduced.

For a better understanding of the above-described embodiments, the following scenarios are provided.

### Scenario 1:

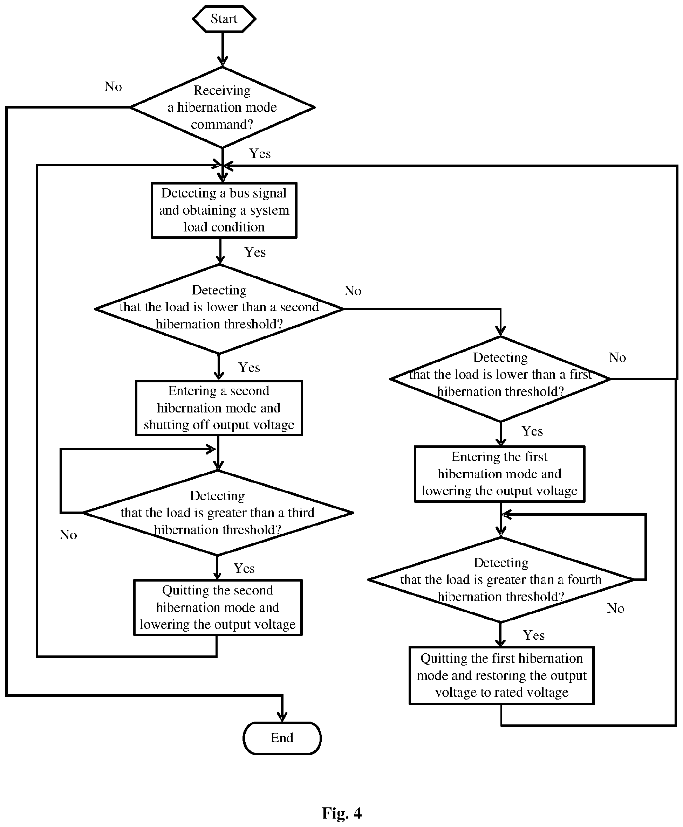

A server system is powered by four power supplies inserted into a system backboard of a server. The four parallel power supplies form an embodiment of the described power supplies, and the system backboard of the server forms an embodiment of an interface unit and is provided with an I2C communication interface, a hibernation common signal and a bus detection signal. A monitoring unit is integrated into the server system. The server sends a hibernation command to the parallel power supply or queries the operating state of the power supply via the system backboard by using the I2C communication interface. The power supplies in the parallel power supply system are connected with each other via the hibernation common signal, and when a power supply fails, the hibernation common signal wakes up the hibernating power supply. Meanwhile, the power supplies in the parallel power supply system are connected with each other via the bus detection signal to monitor the system load. Electric energy input types of all of the power supplies of the system are alternating current input, and the power supply supports graded hibernation. Fig. 4 is a flow chart of graded hibernation control according to an embodiment of the present disclosure.

As shown in Fig. 4, when it is detected that the traffic is only A% of the full load traffic, that is, reaches the first hibernation threshold, a command is sent to make two power supplies enter the first hibernation mode, in which the hibernation power supplies reduce the output voltage to stop supplying power to the system, and power supplying of the system is provided by other normally-operating power supplies. When the power supply entering the hibernation mode detects, via the bus detection signal, that the traffic of the current server system is reduced to lower than B% of the full load traffic, that is, reaches the second hibernation threshold (note: B<A), the hibernating power supply shuts off the output and enters a standby state, that is, the hibernating power supply enters a deep hibernation state. Meanwhile, the power supply in the deep hibernation mode continues to monitor the system load via the bus detection signal, and returns from the second hibernation mode to the first hibernation mode when the traffic increases to the (B + C)% of the full load traffic, that is, reaches the third deep hibernation threshold, in which the hibernating power supply lowers the output voltage. When the traffic continues to increase to the (A + D)% of the full load traffic, that is, reaches the fourth hibernation mode, the power supply in the second hibernation mode automatically quits the hibernation mode, recovers the output voltage to the rated output, and the power supply and the previous operating power supplies share current to supply power to the system. When the traffic of the server decreases to A% of the full load traffic again, that is, reaches the first hibernation threshold, the power supply that previously received the hibernation command automatically enters the hibernation state again, and continues to operate according to the above procedure. When any one of the operating power supplies fails and cannot supply power, the level of the hibernation common signal is lowered, and the hibernating power supply may quit the hibernation mode immediately when detecting that the level of the hibernation common signal is a low level. When the level of the hibernation common signal is restored to the high level, the hibernating power supply enters the hibernation state again.

When any one of the operating power supplies fails and cannot supply power, the level of the hibernation common signal is lowered, and the hibernating power supply may quit the hibernation mode immediately when detecting that the level of the hibernation common signal is a low level. When the level of the hibernation common signal is restored to the high level, the hibernating power supply enters the hibernation mode again.

Under the condition that the hibernation state is to be quitted, the hibernating power supply may be informed by means of an I2C communication command to quit the hibernation mode.

### Scenario 3:

A server system is powered by four power supplies inserted into a system backboard of a server. The four parallel power supplies form an embodiment of the described power supplies, and the system backboard of the server forms an embodiment of an interface unit and is provided with an I2C communication interface, a hibernation common signal and a bus detection signal which are connected to each power supply. A monitoring unit is integrated into the server system.
1) In the current example, two power supplies in the parallel power supply system are alternating current input, and two power supplies are high-voltage direct current input. The server system queries the input voltage types of the power supplies by means of a communication command, and determines, according to a pre-saved corresponding relation between the input type and the high-efficiency mode, that a high-efficiency input mode is the alternating current input and the high-voltage direct current has a lower efficiency than the alternating current input.
2) The system determines that two of the power supplies needs to enter the hibernation mode, selects the power supplies having the direct current input to enter the hibernation mode according to the input types of the power supplies, and the power supplies having the alternating current input continue operating to provide power for the system. The server system sends a communication command to the two power supplies having the direct current input to inform same to enter the hibernation mode. The two power supplies entering the second hibernation mode lower the output voltage and no longer supply power to the system load.
3) The hibernating power supplies monitor the hibernation common signal in the whole process. When the hibernating power supplies detect that the level of the hibernation common signal is lowered, the hibernating power supplies may quit the hibernation mode immediately, but the hibernation control instruction needs to be reserved. When the hibernating power supplies detect that the level of the hibernation common signal is restored to the high level, the hibernating power supplies reenter the hibernation mode.

### Scenario 3:

A server system is powered by four power supplies inserted into a system backboard of a server. The four parallel power supplies form an embodiment of the described power supplies, and the system backboard of the server forms an embodiment of an interface unit and is provided with an I2C communication interface, a hibernation common signal and a bus detection signal which are connected to each power supply. A monitoring unit is integrated into the server system.

In the present example, the electric energy input types of all power supplies of the parallel power supply system are alternating current input, and the conversion efficiency levels of the power supplies are different. Two power supplies are titanium high efficiency server power supplies, and the other two power supplies are platinum server power supplies. A communication apparatus system queries conversion efficiency data of the power supplies by means of a communication command, and determines, according to a pre-saved corresponding relation between the conversion efficiency of the power supply and the high-efficiency mode, that high-efficiency mode power supplies are the titanium power supplies and the platinum power supplies have lower efficiency.

The system determines that two of the power supplies need to enter the hibernation mode, selects the platinum power supplies to enter the hibernation mode according to the conversion efficiency of the power supplies, and the titanium power supply continue operating to provide power to the system. The communication apparatus system sends a command to the two platinum efficiency power supplies via the I2C communication interface to inform same to enter the hibernation mode. The two power supplies entering the hibernation mode lower the output voltage and no longer supply power to the system load.

The hibernating power supplies monitor the hibernation common signal in the whole process. When the hibernating power supplies detect that the level of the hibernation common signal is lowered, the hibernating power supplies may quit the hibernation mode immediately, but the hibernation control instruction needs to be reserved. When the hibernating power supplies detect that the level of the hibernation common signal is restored to the high level, the hibernating power supplies reenter the hibernation mode.

### Scenario 4:

A server system is powered by four power supplies inserted into a system backboard of a server. The four parallel power supplies form an embodiment of the described power supplies, and the system backboard of the server forms an embodiment of an interface unit and is provided with an I2C communication interface, a hibernation common signal and a bus detection signal which are connected to each power supply. A monitoring unit is integrated into the server system.
1) In the current example, two power supplies in the parallel power supply system have alternating current input and the other two power supplies have high-voltage direct current input, the efficiency levels of the power supplies are different. Two power supplies are titanium high efficiency server power supplies, and the other two power supplies are platinum server power supplies. The monitoring unit sorts the read conversion efficiency of the power supplies according to a preset input type efficiency prioritization table, then weighted calculation is carried out on the conversion efficiency and the input efficiency of each power supply to obtain comprehensive efficiency.
2) The system determines that two power supplies need to enter the hibernation mode, selects the power supplies with lower comprehensive efficiency to enter the hibernation mode according to the comprehensive efficiency of the power supplies, and selects the power supplies with higher comprehensive efficiency to continue operating to provide power to the system. The communication apparatus system sends a command via the I2C communication interface to the two power supplies with lower comprehensive efficiency to inform same to enter the hibernation mode. After the two power supplies enter the hibernation state, hibernation control is performed according to the hibernation control strategy the same as Scenario 1.
3) The hibernating power supply monitors the hibernation common signal in the whole process. When the hibernating power supplies detect that the level of the hibernation common signal is lowered, the hibernating power supplies may quit the hibernation mode immediately, but the hibernation control instruction needs to be reserved. When the hibernating power supplies detect that the level of the hibernation common signal is restored to the high level, the hibernating power supplies reenter the hibernation mode.

### Embodiment 3

The embodiment further provides a hibernation device for a power supply. The device is used to implement the above embodiments and exemplary implementations, and the details having been described will not be repeated. As used below, the term "module" may implement a combination of software and/or hardware of a predetermined function. Although the device described in the following embodiments is preferably implemented in software, the implementation in hardware or a combination of software and hardware is also possible and contemplated.

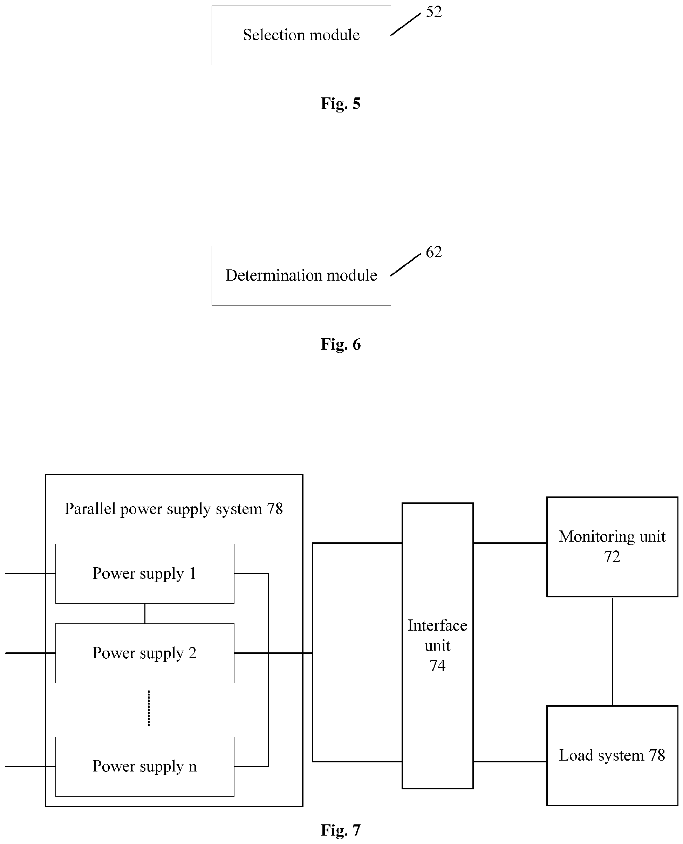

Fig. 5 is a structural block diagram of a hibernation device for a power supply according to an embodiment of the present disclosure. As shown in Fig.5, the device includes a hibernation module 52.

The hibernation module 52 is configured to select, according to power supply information of each power supply in a parallel power supply system, one or more power supplies which are to enter a hibernation mode, wherein the power supply information at least includes: an electric energy input type of the power supply and conversion efficiency of the power supply.

The hibernation module 52 includes: a first selection unit, configured to select, in a case where power supplies in the parallel power supply system are of the same electric energy input type and have the same conversion efficiency, the one or more power supplies which are to enter the hibernation mode according to operating information of each power supply.

In at least one exemplary implementation of the embodiment, the hibernation module 52 may further include: a second selection unit, configured to select, in a case where power supplies in the parallel power supply system are of different electric energy input types and have the same conversion efficiency, the one or more power supplies which are to enter the hibernation mode according to the electric energy input type of each power supply.

In at least one exemplary implementation of the embodiment, the second selection unit is further configured to obtain the electric energy input type of each power supply, and sort electric energy input efficiency of the power supplies according to the electric energy input type of each power supply; and select, according to a sorting result of the electric energy input efficiency of the power supplies and an electric energy input state of each power supply, one or more power supplies from low to high as the one or more power supplies which are to enter the hibernation mode.

In at least one exemplary implementation of the embodiment, the hibernation module 52 may further include: a third selection unit, configured to sort, in a case where power supplies in the parallel power supply system are of the same electric energy input type and have different conversion efficiency, the conversion efficiency of the power supplies, and select one or more power supplies from low to high as the one or more power supplies which are to enter the hibernation mode.

In at least one exemplary implementation of the embodiment, the third selection unit is further configured to sort the conversion efficiency of the power supplies according to an efficiency level of each power supply.

In at least one exemplary implementation of the embodiment, the hibernation module 52 may further include: a fourth selection unit, configured to comprehensively select, in a case where power supplies in the parallel power supply system are of different electric energy input types and have different conversion efficiency, the one or more power supplies which are to enter the hibernation mode according to the electric energy input type and the conversion efficiency of each power supply.

### Embodiment 4

The embodiment further provides a device for determining hibernation of a power supply. The device is used to implement the above embodiments and exemplary implementations, and the details having been described will not be repeated. As used below, the term "module" may implement a combination of software and/or hardware of a predetermined function. Although the device described in the following embodiments is preferably implemented in software, the implementation in hardware or a combination of software and hardware is also possible and contemplated.

Fig. 6 is a structural block diagram of a device for determining hibernation of a power supply according to an embodiment of the present disclosure. As shown in Fig.6, the device includes a determination module 62.

The determination module 62 is configured to determine, according to load information of a load system to which power is supplied, a hibernation mode which one or more power supplies in a parallel power supply system enter, wherein the one or more power supplies are determined according to the power supply information of each power supply in the parallel power supply system, the power supply information at least includes: an electric energy input type of the power supply and conversion efficiency of the power supply.

In at least one exemplary implementation of the embodiment, the determination module 62 is further configured to determine whether load traffic of the load system satisfies a hibernation threshold; and determine, in a case of determining that the load traffic of the load system satisfies the hibernation threshold, that the one or more power supplies enter a hibernation mode corresponding to the hibernation threshold.

In at least one exemplary implementation of the embodiment, the determination module 62 is further configured to determine, in a case where the one or more power supplies determine that the load traffic of the load system satisfies a first hibernation threshold, that the one or more power supplies enter a first hibernation mode and reduce output voltage.

In at least one exemplary implementation of the embodiment, the determination module 62 is further configured to determine, in a case where the one or more power supplies determine that the load traffic of the load system satisfies a second hibernation threshold, that the one or more power supplies enter a second hibernation mode and shut off output voltage, wherein the second hibernation threshold is lower than the first hibernation threshold.

In at least one exemplary implementation of the embodiment, the determination module 62 is further configured to determine, in a case where the one or more power supplies determine that the load traffic of the load system increases and satisfies a third hibernation threshold, that the one or more power supplies entering the second hibernation mode enter the first hibernation mode and reduce output voltage, wherein the third hibernation threshold is a sum of the second hibernation threshold and a load traffic increment.

In at least one exemplary implementation of the embodiment, the determination module 62 is further configured to determine, in a case of determining that the load traffic of the load system increases and satisfies a fourth hibernation threshold, that the one or more power supplies entering the hibernation mode quit the hibernation mode and recover output of operating voltage, wherein the fourth hibernation threshold is a sum of the first hibernation threshold and a load traffic increment.

In at least one exemplary implementation of the embodiment, the determination module 62 may further include: a first detection module, configured to detect whether a hibernation common signal between power supplies is set to indicate failure; and a first determination unit, configured to determine, in a case where the first detection module detects that the hibernation common signal is set to indicate failure, that the one or more power supplies entering the hibernation mode quit the hibernation mode and recover output of operating voltage.

In at least one exemplary implementation of the embodiment, the determination module 62 may further include: a second detection module, configured to detect whether the hibernation common signal between the power supplies is set to indicate normal operation; and a second determination unit, configured to determine, in a case where the second detection module detects that the hibernation common signal is set to indicate normal operation, that the one or more power supplies with the output of the operating voltage recovered reenter the hibernation mode.

### Embodiment 5

The embodiment further provides a hibernation apparatus for a power supply, the device is configured to implement the embodiments and the exemplary implementations, and the content has been made will not be repeated.

Fig. 7 is a structural block diagram of a hibernation apparatus for a power supply according to an embodiment of the present disclosure. As shown in Fig.7, the device includes: a monitoring unit 72, an interface unit 74, a parallel power supply system 76, and a load system 78.

The monitoring unit 72 is configured to obtain power supply information of each power supply in the parallel power supply 76 system by means of the interface unit 74, and select, according to the power supply information of each power supply, one or more power supplies which are to enter a hibernation mode.

The parallel power supply system 76 is configured to obtain the one or more power supplies which are to enter the hibernation mode by means of the interface unit 74, obtain, by means of the interface unit 74, load information of the load system 78 to which the parallel power supply system 76 supplies power, and determine a hibernation mode which the one or more power supplies in the parallel power supply system 76 enter.

### Embodiment 5

According to the embodiment of the present disclosure, further provided is storage medium, the storage medium storing a computer program, wherein the computer program is configured to execute the operations of any one of the method embodiments described above.

In at least one exemplary implementation of the embodiment, the storage medium mentioned above may include, but is not limited to, a universal serial bus flash disk, a read-only memory (ROM), a random access memory (RAM), a removable hard disk, a magnetic disk, or an optical disk, and various media that may store the computer program.

### Embodiment 6

Further provided in the embodiment of the present disclosure is an electronic device, including a memory and a processor, wherein the memory stores a computer program, and the processor is configured to run the computer program to execute the operations of any one of the method embodiments described above.

In at least one exemplary implementation of the embodiment, the electronic device may further include a transmission apparatus and an input/output apparatus, wherein the transmission apparatus is connected to the processor mentioned above and the input/output apparatus is connected to the processor mentioned above.

Specific examples in this embodiment may be referred to the examples described in the above-mentioned embodiments and exemplary implementations, which are not described in detail herein.

It is apparent that a person skilled in the art shall understand that all of the above-mentioned modules or operations in the present disclosure may be implemented by using a general computation apparatus, may be centralized on a single computation apparatus or may be distributed on a network composed of multiple computation apparatuses. Optionally, they may be implemented by using executable program codes of the computation apparatuses. Thus, they may be stored in a storage apparatus and executed by the computation apparatuses, the shown or described operations may be executed in a sequence different from this sequence under certain conditions, or they are manufactured into each integrated circuit module respectively, or multiple modules or operations therein are manufactured into a single integrated circuit module. Thus, the embodiments of the present disclosure are not limited to any specific hardware and software combination.

The above is only the exemplary embodiments of the present disclosure, not intended to limit the present disclosure. As will occur to those having ordinary skill in the art, the present disclosure is susceptible to various modifications and changes. Any modifications, equivalent replacements, improvements and the like made within the principle of the present disclosure shall fall within the scope of protection of the present disclosure.

### Industrial Applicability

By means of the embodiments of the present disclosure, an optimal energy-saving control strategy can be carried out according to the system power input type and the conversion efficiency. In addition, in a dynamic hibernation mode, two-grade hibernation can be achieved to maximize the energy-saving effect, and self-management of the hibernation function can be achieved through monitoring the load in real time by the power supplies without system intervention. The use of a hibernation common signal can ensure reliable and stable power supplying of the power supplies. The problem in the related art that the improvement on the overall energy-saving effect of the power supply system only through increasing the power supply load rate is not obvious is solved. An overall energy-saving control strategy with low cost and high return on investment is achieved.

## Claims

1. A hibernation method for a power supply, comprising:
selecting, according to power supply information of each power supply in a parallel power supply system, one or more power supplies which are to enter a hibernation mode, wherein the power supply information at least comprises: an electric energy input type of the power supply and conversion efficiency of the power supply.

2. The method according to claim 1, wherein selecting, according to the power supply information of each power supply in the parallel power supply system, the one or more power supplies which are to enter the hibernation mode comprises:
in a case where power supplies in the parallel power supply system are of the same electric energy input type and have the same conversion efficiency, selecting, according to operating information of each power supply, the one or more power supplies which are to enter the hibernation mode.

3. The method according to claim 2, wherein the operating information comprises at least one of: operation time of each power supply and an operation temperature of each power supply.

4. The method according to claim 1, wherein selecting, according to the power supply information of each power supply in the parallel power supply system, the one or more power supplies which are to enter the hibernation mode comprises:
in a case where power supplies in the parallel power supply system are of different electric energy input types and have the same conversion efficiency, selecting, according to the electric energy input type of each power supply, the one or more power supplies which are to enter the hibernation mode.

5. The method according to claim 4, wherein selecting, according to the power supply information of each power supply in the parallel power supply system, the one or more power supplies which are to enter the hibernation mode further comprises:
obtaining the electric energy input type of each power supply, and sorting electric energy input efficiency of the power supplies according to the electric energy input type of each power supply; and
selecting, according to a sorting result of the electric energy input efficiency of the power supplies and an electric energy input state of each power supply, one or more power supplies from low to high as the one or more power supplies which are to enter the hibernation mode.

6. The method according to claim 1, wherein selecting, according to the power supply information of each power supply in the parallel power supply system, the one or more power supplies which are to enter the hibernation mode comprises:
in a case where power supplies in the parallel power supply system are of the same electric energy input type and have different conversion efficiency, sorting the conversion efficiency of the power supplies, and selecting one or more power supplies from low to high as the one or more power supplies which are to enter the hibernation mode.

7. The method according to claim 6, wherein sorting the conversion efficiency of the power supplies further comprises: sorting the conversion efficiency of the power supplies according to an efficiency level of each power supply.

8. The method according to claim 1, wherein selecting, according to the power supply information of each power supply in the parallel power supply system, the one or more power supplies which are to enter the hibernation mode comprises:
in a case where power supplies in the parallel power supply system are of different electric energy input types and have different conversion efficiency, comprehensively selecting, according to the electric energy input type and the conversion efficiency of each power supply, the one or more power supplies which are to enter the hibernation mode.

9. A method for determining hibernation of a power supply, comprising:
determining, according to load information of a load system to which power is supplied, a hibernation mode which one or more power supplies in a parallel power supply system enter, wherein the one or more power supplies are determined according to power supply information of each power supply in the parallel power supply system, and the power supply information at least comprises: an electric energy input type of the power supply and conversion efficiency of the power supply.

10. The method according to claim 9, wherein determining the hibernation mode which the one or more power supplies enter comprises:
determining, by the one or more power supplies, whether load traffic of the load system satisfies a hibernation threshold; and in a case of determining that the load traffic of the load system satisfies the hibernation threshold, entering, by the one or more power supplies, a hibernation mode corresponding to the hibernation threshold.

11. The method according to claim 10, wherein determining the hibernation mode which the one or more power supplies enter comprises:
in a case where the one or more power supplies determine that the load traffic of the load system satisfies a first hibernation threshold, entering, by the one or more power supplies, a first hibernation mode and reducing, by the one or more power supplies, output voltage.

12. The method according to claim 11, wherein determining the hibernation mode which the one or more power supplies enter comprises:
in a case where the one or more power supplies determine that the load traffic of the load system satisfies a second hibernation threshold, entering, by the one or more power supplies, a second hibernation mode and shutting off, by the one or more power supplies, output voltage, wherein the second hibernation threshold is lower than the first hibernation threshold.

13. The method according to claim 12, wherein determining the hibernation mode which the one or more power supplies enter comprises:
in a case where the one or more power supplies entering the second hibernation mode determine that the load traffic of the load system increases and satisfies a third hibernation threshold, entering, by the one or more power supplies, the first hibernation mode and reducing, by the one or more power supplies, the output voltage, wherein the third hibernation threshold is a sum of the second hibernation threshold and a load traffic increment.

14. The method according to any one of claims 9 to 13, wherein after the one or more power supplies enter the hibernation mode corresponding to the hibernation threshold, determining the hibernation mode which the one or more power supplies enter further comprises:
in a case where the one or more power supplies entering the hibernation mode determine that the load traffic of the load system increases and satisfies a fourth hibernation threshold, quitting, by the one or more power supplies, the hibernation mode and recovering, by the one or more power supplies, output of operating voltage, wherein the fourth hibernation threshold is a sum of the first hibernation threshold and a load traffic increment.

15. The method according to any one of claims 9 to 13, wherein after determining the hibernation mode which the one or more power supplies enter, the method further comprises:
detecting, by the one or more power supplies entering the hibernation mode, whether a hibernation common signal between power supplies is set to indicate failure; and
in a case of detecting that the hibernation common signal is set to indicate failure, quitting, by the one or more power supplies entering the hibernation mode, the hibernation mode and recovering, by the one or more power supplies, output of operating voltage.

16. The method according to claim 15, wherein after the one or more power supplies entering the hibernation mode quit the hibernation mode and recover the output of the operating voltage, the method further comprises:
detecting, by the one or more power supplies with the output of the operating voltage recovered, whether the hibernation common signal between the power supplies is set to indicate normal operation; and
in a case of detecting that the hibernation common signal is set to indicate normal operation, reentering, by the one or more power supplies with the output of the operating voltage recovered, the hibernation mode.

17. A hibernation device for a power supply, wherein the device comprises one or more processors and one or more memories storing one or more program units, and the one or more program units are executed by the processor and comprise:
a selection module, configured to select, according to power supply information of each power supply in a parallel power supply system, one or more power supplies which are to enter a hibernation mode, wherein the power supply information at least comprises: an electric energy input type of the power supply and conversion efficiency of the power supply.

18. The device according to claim 17, wherein the selection module comprises:
a first selection unit, configured to select, in a case where power supplies in the parallel power supply system are of the same electric energy input type and have the same conversion efficiency, the one or more power supplies which are to enter the hibernation mode according to operating information of each power supply.

19. The device according to claim 17, wherein the selection module further comprises:
a second selection unit, configured to select, in a case where power supplies in the parallel power supply system are of different electric energy input types and have the same conversion efficiency, the one or more power supplies which are to enter the hibernation mode according to the electric energy input type of each power supply.

20. The device according to claim 19, wherein the second selection unit is further configured to obtain the electric energy input type of each power supply, and sort electric energy input efficiency of the power supplies according to the electric energy input type of each power supply; and select, according to a sorting result of the electric energy input efficiency of the power supplies and an electric energy input state of each power supply, one or more power supplies from low to high as the one or more power supplies which are to enter the hibernation mode.

21. The device according to claim 17, wherein the selection module further comprises:
a third selection unit, configured to, in a case where power supplies in the parallel power supply system are of the same electric energy input type and have different conversion efficiency, sort the conversion efficiency of the power supplies, and select one or more power supplies from low to high as the one or more power supplies which are to enter the hibernation mode.

22. The device according to claim 21, wherein the third selection unit is further configured to sort the conversion efficiency of the power supplies according to an efficiency level of each power supply.

23. The device according to claim 17, wherein the selection module further comprises:
a fourth selection unit, configured to comprehensively select, in a case where power supplies in the parallel power supply system are of different electric energy input types and have different conversion efficiency, the one or more power supplies which are to enter the hibernation mode according to the electric energy input type and the conversion efficiency of each power supply.

24. A device for determining hibernation of a power supply, wherein the device is located in a parallel power supply system and comprises:
a determination module, configured to determine, according to load information of a load system to which power is supplied, a hibernation mode which one or more power supplies in a parallel power supply system enter, wherein the one or more power supplies are determined according to the power supply information of each power supply in the parallel power supply system, and the power supply information at least comprises: an electric energy input type of the power supply and conversion efficiency of the power supply.

25. The device according to claim 24, wherein the determination module is further configured to determine whether load traffic of the load system satisfies a hibernation threshold; and determine, in a case of determining that the load traffic of the load system satisfies the hibernation threshold, that the one or more power supplies enter a hibernation mode corresponding to the hibernation threshold.

26. The device according to claim 24, wherein the determination module is further configured to determine, in a case of determining that the load traffic of the load system satisfies a first hibernation threshold, that the one or more power supplies enter a first hibernation mode and reduce output voltage.

27. The device according to claim 26, wherein the determination module is further configured to determine, in a case of determining that the load traffic of the load system satisfies a second hibernation threshold, that the one or more power supplies enter a second hibernation mode and shut off output voltage, wherein the second hibernation threshold is lower than the first hibernation threshold.

28. The device according to claim 27, wherein the determination module is further configured to determine, in a case where the one or more power supplies entering the second hibernation mode determine that the load traffic of the load system increases and satisfies a third hibernation threshold, that the one or more power supplies enter the first hibernation mode and reduce output voltage, wherein the third hibernation threshold is a sum of the second hibernation threshold and a load traffic increment.

29. The device according to any one of claims 24 to 28, wherein the determination module is further configured to determine, in a case of determining that the load traffic of the load system increases and satisfies a fourth hibernation threshold, that the one or more power supplies entering the hibernation mode quit the hibernation mode and recover output of operating voltage, wherein the fourth hibernation threshold is a sum of the first hibernation threshold and a load traffic increment.

30. The device according to any one of claims 24 to 28, wherein the determination module further comprises:
a first detection module, configured to detect whether a hibernation common signal between power supplies is set to indicate failure; and
a first determination unit, configured to determine, in a case where the first detection module detects that the hibernation common signal is set to indicate failure, that the one or more power supplies entering the hibernation mode quit the hibernation mode and recover output of operating voltage.

31. The device according to claim 30, wherein the determination module further comprises:
a second detection module, configured to detect whether the hibernation common signal between the power supplies is set to indicate normal operation; and
a second determination unit, configured to determine, in a case where the second detection module detects that the hibernation common signal is set to indicate normal operation, that the one or more power supplies with the output of the operating voltage recovered reenter the hibernation mode.

32. A hibernation apparatus for a power supply, the apparatus comprising one or more processors and one or more memories storing one or more program units, wherein the one or more program units are executed by the processor and comprise: a parallel power supply system, an interface unit, a monitoring unit, and a load system, wherein
the monitoring unit is configured to obtain power supply information of each power supply in the parallel power supply system by means of the interface unit, and select, according to the power supply information of each power supply, one or more power supplies which are to enter a hibernation mode; and
the parallel power supply system is configured to obtain the one or more power supplies which are to enter the hibernation mode by means of the interface unit, obtain, by means of the interface unit, load information of the load system to which the parallel power supply system supplies power, and determine the hibernation mode which one or more power supplies in a parallel power supply system enter.

33. A storage medium, the storage medium storing a computer program, wherein the computer program is configured to execute the method according to any one of claims 1 to 8 and 9 to 16 at runtime.

34. An electronic apparatus, comprising a memory and a processor, wherein the memory stores a computer program, and the processor is configured to run the computer program to execute the method according to any one of claims 1 to 8 and 9 to 16.
